Europäisches Patentamt

European Patent Office

Office européen des brevets

(19)

(11) **EP 0 772 407 B1**

(12) **FASCICULE DE BREVET EUROPEEN**

(45) Date de publication et mention
de la délivrance du brevet:
**07.11.2001 Bulletin 2001/45**

(51) Int Cl.⁷: **A23L 3/00**, A23L 3/16

(21) Numéro de dépôt: **95924355.1**

(22) Date de dépôt: **22.06.1995**

(86) Numéro de dépôt international:
**PCT/FR95/00835**

(87) Numéro de publication internationale:
**WO 95/35039 (28.12.1995 Gazette 1995/55)**

(54) **PROCEDE POUR PREPARER UN PRODUIT PASTEURISE NOTAMMENT ALIMENTAIRE PRESENTANT UNE CONSERVATION DE LONGUE DUREE**

VERFAHREN ZUR HERSTELLUNG VON EINEM PASTEURISIERTEN PRODUKT, INSBESONDERE LEBENSMITTEL, MIT LANGER HALTBARKEIT

METHOD FOR PREPARING A LONG-LIFE PASTEURISED PRODUCT, PARTICULARLY A FOOD PRODUCT

(84) Etats contractants désignés:
**AT BE CH DE DK ES FR GB GR IE IT LI LU MC NL PT SE**

(30) Priorité: **22.06.1994 FR 9407632**

(43) Date de publication de la demande:
**14.05.1997 Bulletin 1997/20**

(73) Titulaire: **UNION POUR LE COMMMERCE LE FINANCEMENT ET LES ETUDES F-75003 Paris (FR)**

(72) Inventeur: **ALCARAZ, Gérard F-21800 Quetigny (FR)**

(74) Mandataire: **Hammond, William et al Cabinet Hammond 33, rue Vaneau 75007 Paris (FR)**

(56) Documents cités:
**EP-A- 0 230 167        EP-A- 0 419 304**

## Description

La présente invention concerne un procédé pour préparer un produit pasteurisé, notamment alimentaire, présentant une conservation de longue durée. Ce procédé comprend un traitement thermique et qui permet d'assurer une conservation de longue durée au froid positif (entre + 3°C et + 5°C), sans détériorer les principales qualités et caractéristiques chimiques, rhéologiques, et /ou organoleptiques, en particulier gustatives, des produits non pasteurisés correspondants, c'est-à-dire des mêmes produits alimentaires ou non, n'ayant pas subi de traitement thermique autre que celui nécessaire à leur préparation.

Pour permettre une conservation de longue durée pour des produits pasteurisés, il est actuellement bien connu de mettre en oeuvre plusieurs procédés différents, tels que appertisation, stérilisation, pasteurisation, surgélation, ionisation par irradiation, lyophilisation, ou plus récemment utilisation des hautes pressions.

La stérilisation est un procédé de conservation qui, dans sa forme conventionnelle, dégrade les produits traités au plan nutritionnel, rhéologique et organoleptique, et affecte, par les températures nécessaires au traitement, en particulier leur saveur et leur aspect. De ce fait, ce procédé ne permet pas de fabriquer ou préparer des produits de haut de gamme. En conséquence, ce procédé n'est utilisé à grande échelle que pour traiter des produits qui ne sont pas initialement des produits de haut de gamme, ou des produits que le traitement thermique élevé ne dégradera pas. Il est utilisé en particulier pour des liquides tel que le lait.

La surgélation est un procédé de conservation qui provoque également des dégradations physico-chimiques irréversibles des produits traités, en affectant notamment leurs protéines et l'amidon qu'ils contiennent, du fait de l'exposition des produits traités au froid négatif, de plus, les produits traités, par la présence inéluctable de cristaux de glace intemes, perdront à la cuisson et lors de tout traitement thermique ultérieur comme par exemple la pasteurisation, leur texture et leurs caractères rhéologiques. Pour ces raisons, la surgélation n'est utilisée que pour préparer des produits qui ne sont pas de haut de gamme ou qui ne sont pas dégradés par le froid négatif.

La réfrigération est un procédé de conservation satisfaisant au plan organoleptique, tant que le délai de conservation des produits alimentaires réfrigérés est très court. Mais ce procédé a pour inconvénient de n'interrompre ni l'activité microbienne, ni l'activité enzymatique. En particulier, les spores de Clostridium botulinum de type E, qui sont les micro-organismes les plus dangereux pour l'organisme humain parmi ceux potentiellement présents dans les produits alimentaires, peuvent germer dans certaines conditions de température rencontrées lors de la conservation au froid positif, en particulier lors de rupture de froid ou dès que la température devient supérieure à 2,2° C, et végètent à partir de + 3° C.

La lyophilisation est un procédé de conservation dont la mise en oeuvre est très onéreuse, et qui, de plus, est réservé à quelques produits (par exemple alimentaires) ou matières premières qui ne sont pas de haut de gamme. La déshydratation obtenue sur le produit entraîne des problèmes de texture et de réhydratation très complexes qui limitent le procédé à des produits adaptés à la lyophilisation.

La conservation des produits alimentaires frais, au froid positif et sous vide, est un procédé récent qui ralentit ou arrête le développement de la majeure partie de la flore microbienne aérobie. Mais il peut favoriser, dans certains cas (pH élevé, charge microbienne élevée, flore lactique insuffisante, ou légère rupture de froid), la germination et la végétation des micro-organismes anaérobies les plus dangereux tels que Clostridium botulinum et permettre, de plus, la formation de zones, telles que les exsudats et les substrats, qui sont particulièrement favorables au développement de toutes les bactéries anaérobies strictes ou facultatives. La mise en oeuvre de ce procédé connu est donc délicate.

L'irradiation ionisante n'est autorisée que pour certains produits, à des doses d'irradiation telles qu'elle réduit la charge microbienne sans cependant la détruire totalement. De plus, les doses stérilisantes peuvent dégrader les produits alimentaires ; et les connaissances en ce domaine sont très incomplètes sur le risque toxicologique, d'où l' unique autorisation pour les emballages. Un autre inconvénient de ce procédé de conservation est que les installations d'irradiation sont d'un coût très élevé et que le risque lors de l'utilisation entraîne des précautions draconiennes.

L'utilisation des hautes pressions est une technique récente qui demandera encore de nombreuses années pour la maîtrise du procédé. Outre le prix très élevé des installations qui ,actuellement, ne traitent que des volumes réduits de produits, les hautes pressions provoquent notamment l'altération des couleurs dans les produits camés. Came dégradation a une incidence directe sur les caractères organoleptiques.

Les procédés de conservation connus ont donc pour inconvénient commun qu'aucun d'entre eux ne permet simultanément d'assurer une sécurité microbiologique totale, de respecter les qualités et caractéristiques initiales des produits traités, d'être utilisés pour une gamme très étendue de produits pasteurisés, et enfin d'être mis en oeuvre dans des conditions économiques compétitives.

Aussi un des buts de la présente invention est-il de fournir un procédé pour préparer un produit pasteurisé notamment alimentaire, qui permet d'assurer une conservation de longue durée de ceux-ci tout en respectant leur qualité nutritionnelle, rhéologique et organoleptique.

Un autre but de la présente invention est de fournir un tel procédé qui peut être adapté aux caractéristiques de chaque produit individue! à traiter.

Un but supplémentaire de l'invention est de fournir un tel procédé dont la mise en ouvre ne nécessite que du matériel simple et peu onéreux.

Un but complémentaire de la présente invention est de fournir un tel procédé de préparation pour des produits pasteurisés.

Aussi, l'invention a-t-elle pour but de proposer un procédé contrôle et de traitement de produits pasteurisés et plus particulièrement alimentaires permettant une conservation de longue durée de ces demiers en respectant leurs qualités nutritionnelles, rhéologiques et organoleptiques, en s'adaptant aux caractéristiques de chaque produit traité, pris individuellement.

En d'autres termes, l'invention a pour but de proposer un procédé de traitement de produits alimentaires, en vue d'assurer leur conservation sur une longue durée, qui soit d'une grande souplesse d'adaptation aux exigences thermiques on ait au moins atteint une valeur particulière (appelée valeur pasteurisatrice P, qui est exprimé en points. Par exemple, si le pH est de 7, pour détruire les streptocoques D, il est nécessaire d'atteindre une valeur pasteurisatrice P de 40 points.

Ainsi que le sait l'homme du métier, la connaissance de la courbe de cuisson du produit, ou courbe d'évolution de la température de cuisson à coeur du produit en fonction du temps et de son pH, permet de calculer la valeur de pasteurisation atteinte, comme étant la somme des points obtenus aux termes des minutes successives de la cuisson, compte tenu des températures de chauffage à coeur au cours de ces minutes : ceci est notamment décrit dans le document EP-230.167-A.

Pour parvenir à cette neutralisation ces microorganismes sous forme sporulée, le principe à la base de l'invention consiste à créer des conditions physicochimiques telles que ces micro-organismes ne puissent germer et se développer ceci en se référant au microorganisme le plus dangereux, à savoir le Clostridium botulinum.

En ce qui concerne les micro-organismes végétatifs, il est communément admis qu'ils sont détruits dans une mesure satisfaisante lorsque le nombre des streptocoques D, qui sont les plus résistants à la chaleur, est ramené, en fin de traitement thermique, à une valeur de 10° par unité de volume, à partir d'une charge théorique de $10^{20}$. Pour s'assurer de la destruction des streptocoques D, il est connu de soumettre un produit alimentaire à préparer à un traitement thermique dont la durée et la température de chauffe sont telles, en fonction du pH et du rH2 du produit traité, qu'en fin de traitement thermique on ait au moins atteint une valeur particulière appelée valeur pasteurisatrice P, exprimée en points. Par exemple, si le pH est de 6,3 et le rH2 de 16,5, pour détruire les streptocoques D, il est nécessaire d'atteindre une valeur pasteurisatrice P de 40 points. Un tel procédé est notamment décrit dans le brevet américain US 5 094 864 correspondant au document EP-419.304-A.

Selon ce document américain, on mesure directement le pH et le potentiel d'oxydo-réduction de chaque produit alimentaire entrant dans la composition du plat cuisiné à réaliser.

Puis, on transforme la valeur du potentiel d'oxydation en rH2, critères calculés d'après la formule de NERNST ci-dessous. Il donne une indication de l'activité de ces ions sur les composants du milieu ; il influe sur les réactions chimiques et biochimiques et par conséquent sur les micro-organismes.

En d'autres termes, le rH2 définit le potentiel électronique pour un pH donné ; il est donc calculé à partir du potentiel ionique pH et du potentiel d'oxydoréduction E en utilisant la formule de NERNST :

$$rH2 = 2\,pH + 33,33\,E$$

La connaissance de la courbe de cuisson du produit, ou courte d'évolution de la température de cuisson à coeur du produit en fonction du temps et de ses pH et rH2, permet de calculer la valeur de pasteurisation atteinte, comme étant la somme des points obtenus aux termes des minutes successives de la cuisson, comptetenu des températures de chauffage à coeur au cours de ces minutes.

Inversement, connaissant la valeur pasteurisatrice P à atteindre pour un produit de pH et de rH2 donnés, on peut déterminer la courbe de cuisson, et en particulier choisir la température maximum ou les températures minimum et maximum, et les temps de maintien en palier à cette température ou d'évolution entre ces températures, pour être sûr que la valeur pasteurisatrice P sera bien atteinte à la fin de la cuisson. Mais il faut encore, simultanément, neutraliser les micro-organismes à l'état sporulé, et en particulier le Clostridium botulinum potentiellement présent dans le produit alimentaire traité.

Par ailleurs, on sait qu'en abaissant l'activité d'eau Aw par exemple en ajoutant du chlorure de sodium dans le produit alimentaire, on n'assure pas une inhibition totale des micro-organismes, notamment les clostridiums. Un abaissement notable du potentiel d'oxydo-réduction peut entraîner un développement bactérien dans ce cas précis.

On sait, à ce propos, que si l'on effectue une appertisation ou stérilisation du produit, c'est-à-dire si ce produit est porté rapidement à une température élevée, certains micro-organismes adoptent une attitude de défense en sporulant, puis reprennent leur développement dès que le milieu et les conditions de température leur sont redevenues favorables. De plus, il est admis qu'un produit alimentaire se trouve dans un état commercialement stérile lorsqu'en fin de traitement thermique le nombre de germes de Clostridium botulinum a été ramené de $10^{12}$ à 10° par unité de volume. Ceci est par exemple obtenu, pour un produit dont le pH est de 6,5 et le rH2 de 18, si la température à coeur est maintenue à 121,1°C pendant 2,52 mn, alors que si le pH du produit n'est que de 4,5 et son rH2 de 18, le même résultat est obtenu en maintenant une température de 85°C pendant 2 mn seulement. On sait, de plus, que des micro-organismes ayant sporulé ne peuvent germer qu'en présence d'eau libre dans le milieu. On a défini le rapport de l'eau libre à l'eau totale (somme de l'eau libre et de l'eau liée) dans le produit, appelé Aw qui varie entre 0 et 1. On sait que pour un pH de 6,5 et un rH2 de 18, les spores de Clostridium botulinum sont inhibées lorsque Aw est inférieur à 0,91, et qu'en fonction du pH et du rH2, la valeur d'inhibition du rapport Aw évolue selon des courbes connues délimitant une zone de germination stable à une température inférieure à +2°C, une zone d'inhibition totale, et une zone intermédiaire d'inhibition, stable à une température de +7 à +10°C.

Une autre caractéristique propre à l'invention consiste donc à s'assurer que, lorsque la valeur cuisatrice est atteinte, le pH, le rH2 et le rapport Aw du produit correspondent à un point de la zone d'inhibition stabilisée à une température de +7 à +10°C, ce qui autorise une conservation de longue durée dans des conditions industrielles usuelles et convient aux délais les plus couramment fixés par les contraintes commerciales relatives aux dates limites de vente pour des produits alimentaires.

Au cours de la phase d'élaboration de la recette de cuisine ou sur le plat fraîchement cuisiné, c'est-à-dire n'ayant pas encore subi un apport de quantité de chaleur, on mesure directement le pH et le potentiel d'oxydo-réduction E des ingrédients. Chacun de ceux-ci apporte dans la composition du produit une valeur de pH et de rH2 qui participe à celle du plat final. Ainsi, les jus de fruits sont acides, de même les vins et notamment les vins blancs sont acides et souvent oxydants. L'association de ces deux critères, pH et rH2, permet de situer chaque ingrédient, chaque matière première sur un graphe pH - rH2. On peut ainsi situer ces ingrédients par rapport aux zones privilégiées de développement des micro-organismes préjudiciables à la qualité et la conservation du produit.

Dans l'industrie agro-alimentaire, on cherche généralement à placer le produit alimentaire dans une zone de pH inférieur à 5,5. Cette habitude à l'acidification ne tient nullement compte d'un autre facteur indispensable au développement des micro-organismes : le potentiel d'oxydo-réduction. Celui-ci est un élément essentiel pour le développement des bactéries car il conditionne la croissance des formes végétatives et la germination des spores.

Ainsi, par exemple, les bactéries aérobies strictes, c'est-à-aire celles ne pouvant se développer qu'en présence d'oxygène, nécessite un potentiel d'oxydo-réduction élevé. A l'inverse, les bactéries anaérobies, ne pouvant se développer en présence d'oxygène, demandent un potentiel d'oxydo-réduction négatif. Le Clostridium botulinum, bactérie très dangereuse, se développera d'autant plus facilement dans un milieu même acide que le potentiel Redox est faible et l'activité de l'eau proche de 1.

Compte tenu de ce qui précède, une caractéristique propre au procédé selon l'invention consiste à déterminer, en premier lieu, la valeur pasteurisatrice du produit à partir de la mesure de son pH et de son potentiel d'oxydo-réduction ; et, en second lieu, de vérifier que la valeur pasteurisatrice a au moins été atteinte et, de préférence, dépassée : si cela n'est pas le cas, il faut modifier la valeur du pH et /ou du rH2 du produit et, éventuellement, la température maximale de la courbe de cuisson, de sorte qu'à la fin de la cuisson, la valeur thermique à coeur soit atteinte après avoir dépassé la valeur pasteurisatrice.

On a ainsi la certitude que, d'une part, le produit est cuit juste à point pour que son goût soit le meilleur et que, d'autre part, les streptocoques D sont détruits, et donc toutes les formes végétatives. Mais il faut encore, simultanément, neutraliser les micro-organismes à l'état sporulé, et en particulier le Clostridium botulinum potentiellement présent dans le produit alimentaire traité.

Les buts énoncés ci-dessus ainsi que d'autres qui apparaîtront par la suite, sont atteints par un procédé pour préparer un produit pasteurisé notamment alimentaire, permettant d'assurer une conservation de longue durée de ce produit sans en détériorer les qualités et caractéristiques nutritionnelles, rhéologiques et organoleptiques, qui consiste :

- à déterminer la valeur pasteurisatrice du produit, et à soumettre ce produit à un traitement thermique ou cuisson, permettant d'atteindre ladite valeur, lequel procédé est, selon la présente invention, caractérisé par le fait qu'il consiste en outre :

  - à mesurer le pH et le rH2 du produit et à en déduire la valeur pasteurisatrice correspondante,
  - à mesurer le rapport Aw de l'eau libre à l'eau totale contenue dans le produit, et

- à déterminer la courbe de chauffage du traitement thermique, en jouant sur les valeurs du pH et/ou rH2 et /ou du rapport Aw du produit, sans diminuer le pH en dessous de 4,5 et en veillant à ce que l'évolution de la température dans le temps permette de dépasser la température du minimum létal sous laquelle les streptocoques D ne sont pas détruits, afin que la valeur pasteurisatrice soit atteinte et de préférence dépassée, et que le produit se trouve dans des conditions physico-chimiques correspondant à la zone d'inhibition des germes de Clostridium botulinum.

Avantageusement, le procédé consiste, de plus, à effectuer le traitement thermique au bain-marie, à l'étuve ou à l'autoclave, avec une pente relativement faible de montée en température entre une température minimale et une température maximale choisies en tenant compte des caractéristiques rhéologiques du produit à préparer, la température maximale restant toujours inférieure à 100° C afin d'empêcher une destruction de l'aspect du produit. En effet, il n'est pas avantageux que la température à coeur du produit augmente rapidement, car, lors de la montée lente en température, les micro-organismes sporulés peuvent germer : il est alors ensuite possible de les détruire ou de les inhiber. Au contraire, si la température augmente rapidement, ces micro-organismes peuvent rester à l'état sporulé. Le chauffage au bain-marie, à l'étuve ou à l'autoclave, a l'avantage de permettre la reproduction avec une grande fiabilité d'une courbe de chauffage à pente relativement faible, et il peut être réalisé à l'aide de moyens matériels peu coûteux. De plus, sa régulation est simple.

Selon une caractéristique propre à l'invention, on déduit la valeur pasteurisatrice P à partir du pH et du rH2 mesurés à l'aide d'une portion d'abaques semi-logarithmiques représentatives d'une fonction continue de la valeur pasteurisatrice en fonction du pH et du rH2. On mesure ainsi le pH et E, potentiel d'oxydo-réduction, dans chaque catégorie des constituants du plat cuisiné : pH(1) et E(1) du constituant principal, pH(2) et E(2) des légumes, pH(3) et E(3) de la sauce, et on utilise les formules suivantes :

$$pH = \frac{2\ pH(1) + pH(2) + pH(3)}{4}$$

$$E = \frac{2E(1) + E(2) + E(3)}{4}$$

Dans une forme préférée de réalisation, permettant simultanément d'ajuster les températures de cuisson, et en particulier la température maximale, qui a une incidence sur l'aspect du produit à la fin de la cuisson, le procédé selon l'invention est tel qu'il consiste, au début du traitement thermique, à mesurer également la température initiale du produit, à déterminer la plage de température du traitement thermique à l'aide d'un faisceau de courbes donnant, pour différentes valeurs du pH et du rH2, les valeurs pasteurisatrices en fonction de la température et du temps, à calculer, en se basant sur ce faisceau de courbes, la somme des points de pasteurisation pour le pH et le rH2 relevé, et à retenir le traitement thermique et les conditions physico-chimiques du produit ainsi définis si ladite somme est supérieure à la valeur pasteurisatrice, tandis que si ladite somme est inférieure à la valeur pasteurisatrice, on modifie le pH et/ou le rH2 du produit et la température maximum du traitement thermique, et que, si ladite somme est sensiblement égale à la valeur pasteurisatrice, on modifie la température maximum afin d'obtenir un nouveau traitement thermique pour lequel ladite somme sera supérieure à la valeur pasteurisatrice dès que la valeur cuisatrice aura été atteinte, à mesurer le rapport Aw après un refroidissement rapide à coeur du produit, à lire sur les courbes 1 à 5 donnant les valeurs pasteurisatrices en fonction du rapport Aw et du pH si l'on se trouve dans une zone de stabilité du produit et d'inhibition du Clostridium botulinum, et si le produit se situe dans la zone de germination, à modifier le pH et/ou le rH2 et le rapport Aw, de sorte qu'il vienne dans la zone d'inhibition.

Avantageusement selon l'invention, dans le cas d'un produit alimentaire tel qu'un plat cuisiné, on mesure le pH et le rH2 du produit dans la phase solide et dans la phase liquide ou sauce, et on retient le pH le plus élevé pour le traitement. Par ailleurs, il est également préférable d'appliquer le traitement thermique en reproduisant une courbe de pénétration de la chaleur à coeur, au point critique du produit.

La description qui va suivre doit être lue en regard des figures annexées parmi lesquelles :

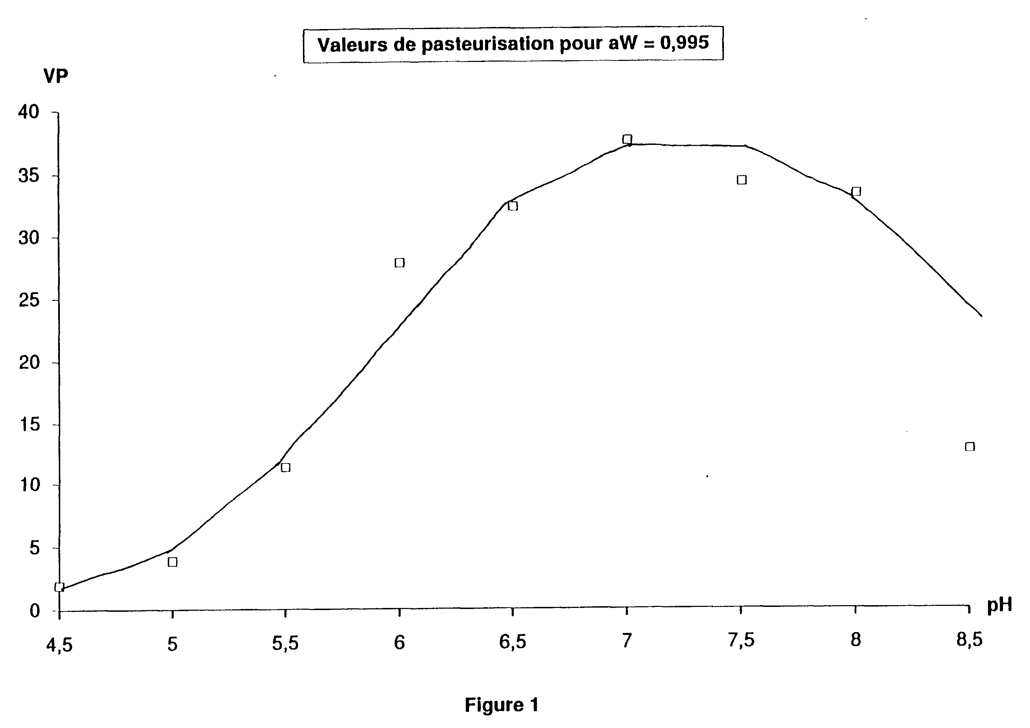

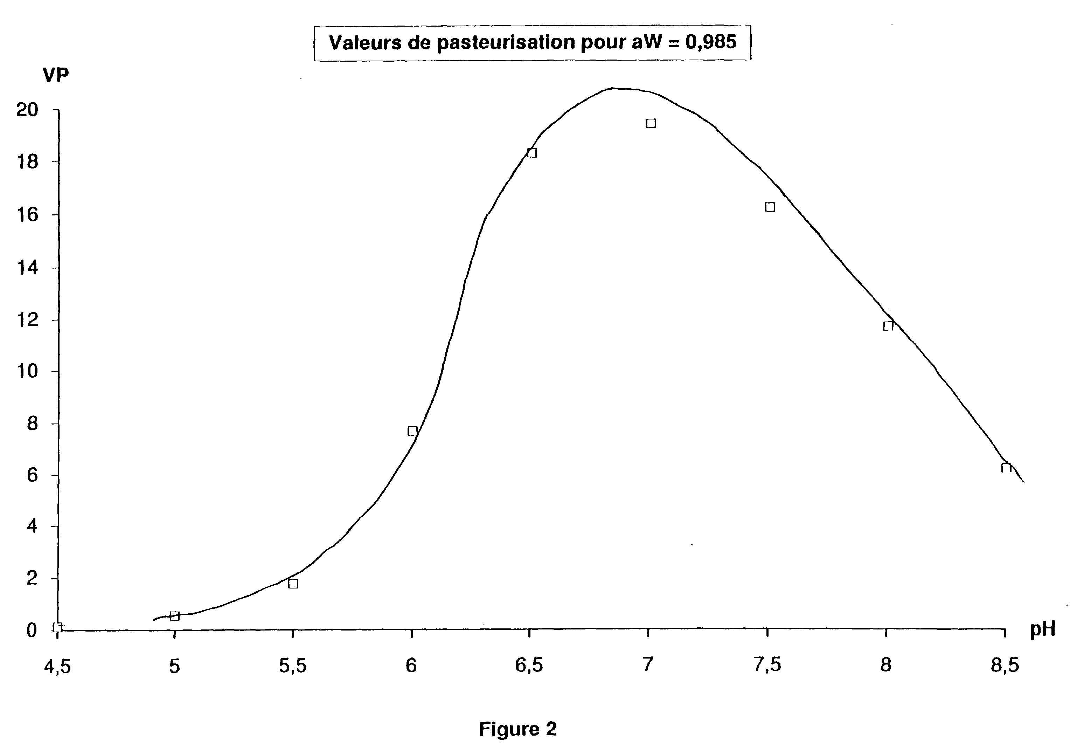

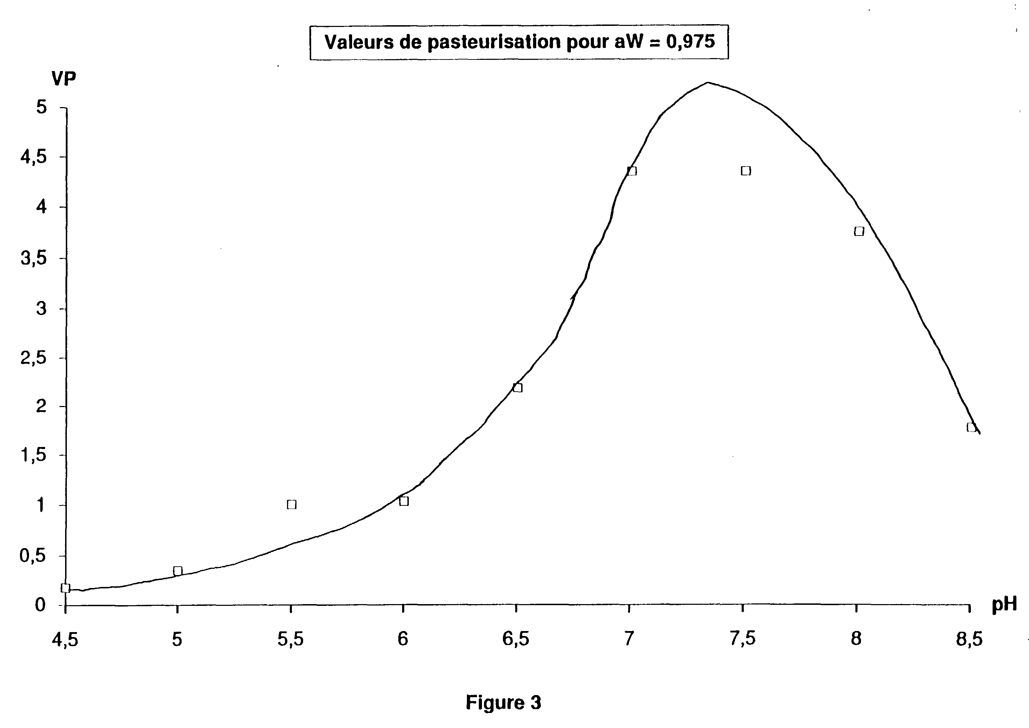

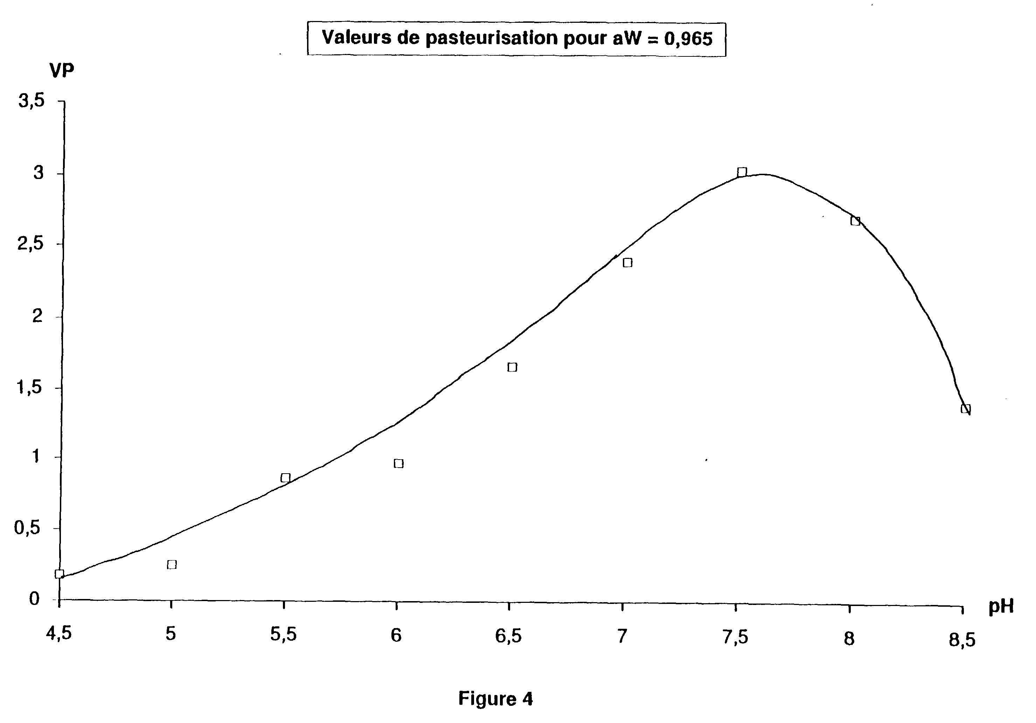

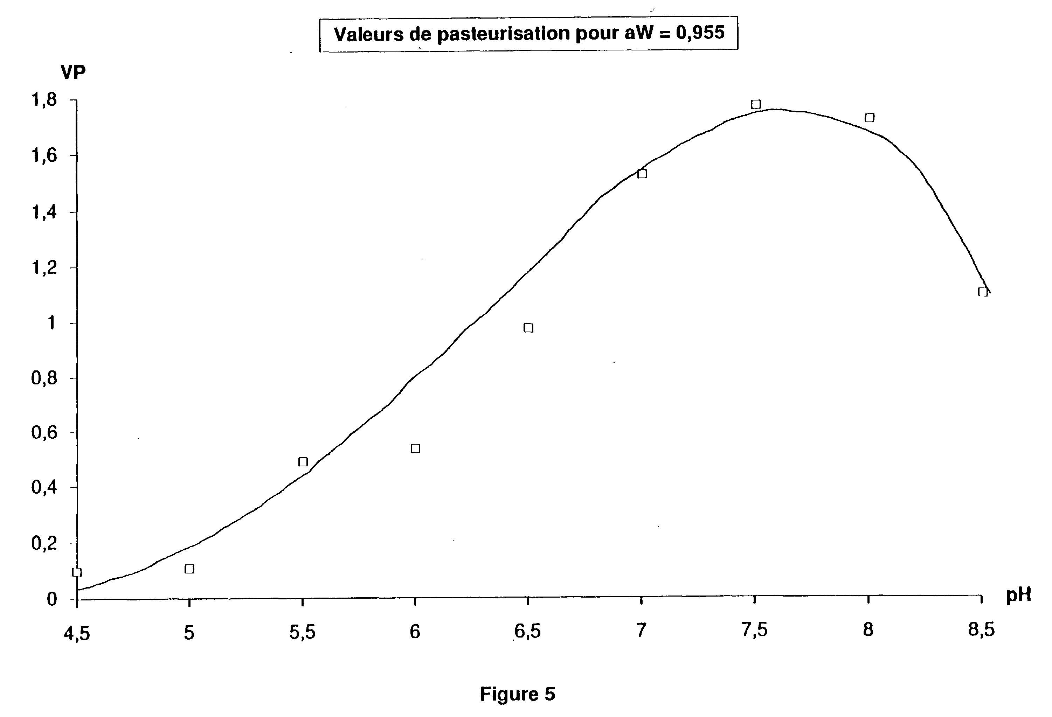

- les figures 1 à 5 sont une représentation d'une fonction continue de la valeur pasteurisatrice VP en fonction du Ph et de l'Aw. Elles représentent en fonction du traitement thermique les limites de stabilité et de germination pour le clostridium botulinum suivant l'évolution du rapport Aw de 0,955 à 1, ceci en fonction du Ph, compris entre 7,5 et 4,5,

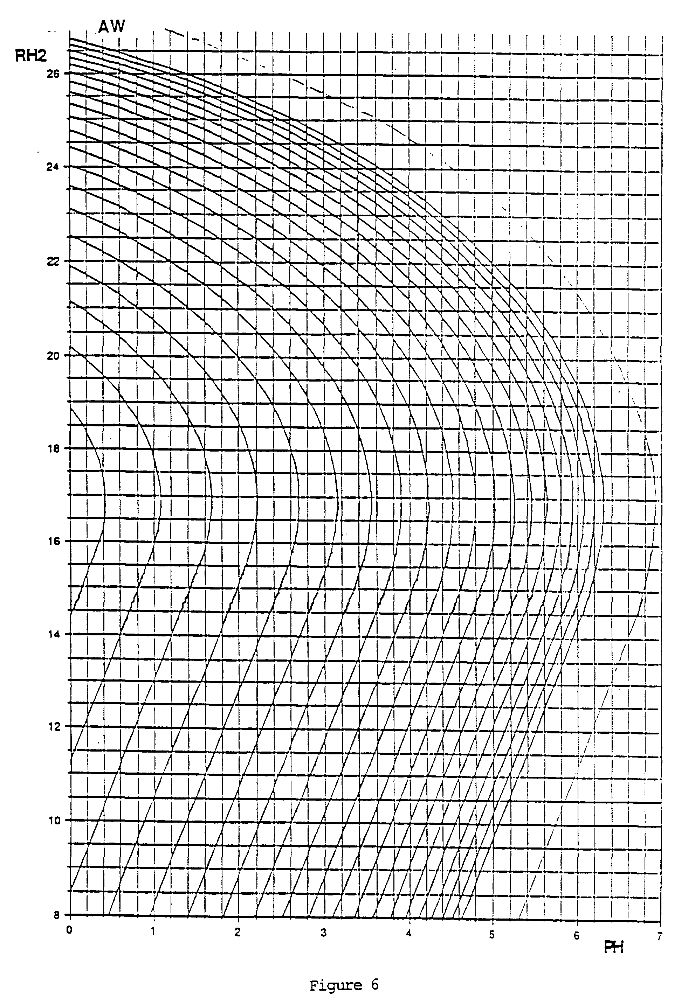

- la figure 6 est un faisceau de courbes en coordonnées sémi-logarithmiques des valeurs de pasteurisation liées à la température de cuisson en fonction du temps, pour différentes valeurs du pH et du rH2, les courbes étant continûment décroissantes et à concavité tournée vers la gauche, entre une température maximum à coeur et une température minimum correspondant au seuil létal pour la destruction des streptocoques D (c'est-à-dire au seuil de température sous lequel les streptocoques D ne peuvent pas être détruits).

La mise en oeuvre du procédé de préparation selon l'invention suppose que la valeur cuisatrice optimum du produit à préparer soit connue avec une bonne précision.

Pour déterminer cette valeur cuisatrice, il est possible de procéder de la manière suivante : on mesure tout d'abord la courbe de pénétration de la chaleur dans le produit, à l'aide d'un enregistreur de température par exemple en plaçant une sonde thermique au point critique du produit, dans le conditionnement prévu pour sa distribution.

La température ambiante est fournie par un bain-marie (ou une étuve ou un autoclave). Cette courbe est enregistrée jusqu'au refroidissement.

Pour déterminer la valeur cuisatrice Cg, c'est-à-dire le temps de cuisson nécessaire pour que le produit soit cuit à point sans surcuisson, on prélève des échantillons à intervalles de temps réguliers jusqu'à ce qu'un échantillon présente le goût recherché.

A cet instant, le refroidissement est opéré ; l'intervalle entre cet instant et le moment où la température est revenue à 20°C, permet de déterminer rétrospectivement sur la courbe ci-dessus, l'instant de refroidissement : on peut donc ainsi déterminer la valeur cuisatrice Cg : intervalle de temps entre l'instant du début du traitement thermique et l'instant de refroidissement.

On répète ce procédé le nombre de fois nécessaire afin de déterminer la valeur cuisatrice Cg avec autant de précision que possible, et de telle sorte que les résultats obtenus aient une représentativité statistique.

Afin de transposer en grandeur industrielle, il est essentiel de tenir compte de la température initiale au moment du traitement thermique de conservation, ainsi que de la cuisson initiale résultant de la mise en oeuvre, pour déterminer précisément la valeur cuisatrice Cg pendant le traitement de conservation.

L'utilisation d'un bain-marie ou d'une étuve se justifie, car il est ainsi possible d'obtenir une montée en température relativement lente, entre une température minimale du traitement à coeur de 65°C, au point critique, et une température maximale de 85°C, sauf cas particuliers.

Connaissant la valeur cuisatrice du produit, pour mettre en oeuvre le procédé ou traitement de conservation selon l'invention, il est tout d'abord nécessaire de déterminer certains paramètres du produit, notamment de mesurer la température initiale To, le pH du produit ainsi que son rapport Aw de l'eau libre à l'eau totale contenue dans le produit, et de tenir compte de son conditionnement, dont la plus petite dimension est de préférence inférieure à 50 mm. Connaissant le pH du produit, on peut déterminer la valeur pasteurisatrice correspondante à l'aide de la courbe des figures 1 à 5, qui représente une variation, de la valeur pasteurisatrice P en fonction du pH pour un rapport Aw donné.

A l'aide des courbes des valeurs pasteurisatrices données par la figure 6, on détermine ensuite la valeur du traitement thermique qui assure la destruction souhaitée des micro-organismes, en gardant à l'esprit que pour un pH inférieur à 4,5 et un traitement thermique de 2 mn à 85°C à coeur du produit, ce dernier ne sera plus un produit frais stabilisé, mais une conserve.

Les courbes de la figure 6 permettent ainsi de déterminer la valeur maximum du traitement thermique (température maximum à coeur), ainsi que la plage de températures du traitement thermique, par exemple de 65 à 85°C. La température maximum à coeur est par exemple programmée dans un programmateur-enregistreur des courbes des valeurs pasteurisatrices P, cuisatrices Cg et des valeurs de point de pasteurisation par minute, par température et par pH en fonction du rH2. En se basant à nouveau sur les courbes de la figure 6, on détermine ensuite les valeurs des points de pasteurisation par minute et pour le pH et le rH2 mesurés, et l'on calcule la somme de ces valeurs de points. Ce calcul peut être effectué automatiquement par le programmateur-enregistreur.

On note que de l'utilisation des courbes de la figure 6 on tire également des indications sur les durées de traitements thermiques en fonction de paliers de température, ce qui permet de déterminer par avance, après avoir déterminé la valeur cuisatrice C , si le traitement résultant de cette détermination est suffisant pour obtenir la stabilisation souhaitée.

Par exemple, si le pH initialement mesuré est de 5,8, et le rH2 de 18,5, il correspond à une valeur pasteurisatrice de 20. Pour une température maximum de 70°, la durée du traitement dans ces conditions est comprise entre 24 et 30 mn. Si la valeur cuisatrice C souhaitée est inférieure, il faut alors diminuer le pH pour préserver les qualités organoleptiques du produit, tout en détruisant les formes végétatives et en stabilisant le produit. A un pH de 5,5 et un rH2 de 17,9 et pour une température maximum de 70°, il correspond une valeur pasteurisatrice Vp de 10.

La durée du traitement thermique nécessaire pour atteindre cette valeur est de 14 à 20 mn suivant la témpérature de départ à coeur, de sorte que l'on peut être certain qu'à la fin du traitement thermique, lorsque la valeur cuisatrice aura été atteinte, la valeur pasteurisatrice aura bien été dépassée.

En reprenant l'exemple précédent, si la valeur cuisatrice Cg est supérieure à 20, le traitement thermique sera suffisant et il est alors inutile de procéder à d'autres calculs. Par contre, si la valeur cuisatrice est voisine de 20, on déterminera avec précision le pH et la température maximum, de manière à disposer d'une marge de sécurité sans avoir à modifier la durée du traitement thermique.

Au plan pratique, le procédé consiste donc successivement :

1) à déterminer la valeur cuisatrice Cg,

2) à reproduire la courbe de pénétration de la chaleur à coeur, au point critique du produit

3) à mesurer la température initiale au début du traitement, le pH et le rH2 initial dans la phase liquide et dans la phase solide pour le traitement,

4) à déterminer la valeur pasteurisatrice P à l'aide du faisceau de courbes qui l'exprime en fonction du pH et du rH2,

5) à déterminer la plage de températures correspondantes,

6) à appliquer le traitement thermique au bain-marie ou en autoclave, en relevant les températures par minute, de façon que la valeur cuisatrice Cg soit respectée,

7) à calculer, la somme des valeurs des points de pasteurisation pour le pH et le rH2 mesuré, ce qui peut être effectué automatiquement par un programmateur-enregistreur,

8) à conserver le traitement thermique prévu initialement et le produit qui en résulte si la somme des valeurs des points de pasteurisation est supérieure à la valeur pasteurisatrice

9) à modifier par contre le pH et /ou le rH2 et la température maximum si cette somme des valeurs de points de pasteurisation est inférieure à la valeur pasteurisatrice,

10) à ne modifier que la température maximum si cette somme des valeurs des points de pasteurisation est sensiblement égale à la valeur pasteurisatrice,

11) à refroidir rapidement à 10°c minimum le produit à coeur, en moins de 2 heures,

12) à mesurer le rapport Aw de l'eau libre à l'eau totale dans le produit, après le traitement thermique,

13) à relever la liste des inhibiteurs naturels tels que les alcools, les acides organiques, les nitrites et les aromates, etc,

14) à lire sur les courbes des figures 1 à 5 si le produit obtenu se trouve dans une zone de stabilité et d'inhibition du Clostridium botulinum,

15) à contrôler les charges microbiennes initiales et finales en germes de référence (germes testés),

16) à tenir compte des inhibiteurs naturels et de la charge microbienne finale pour admettre le produit dans la limite supérieure de la zone d'inhibition

17) à modifier le pH, valeur pasteurisatrice P et la température maximum si la charge microbienne finale ne correspond pas aux réglementations en vigueur,

18) à modifier le pH, le rapport Aw et les sels présents dans le produit si ce dernier se situe dans la zone de germination, et

19) à entreposer, enfin, le produit au froid positif (à, 3°c).

Le procédé selon l'invention tel que défini ci-dessus est particulièrement adapté à la préparation industrielle de produits alimentaires du type plats cuisinés ou autres, distribués en froid positif et vendus par des chaînes de magasins, à la préparation à l'avance et en nombre de plats cuisinés destinés à la restauration collective ou à des chaînes de restaurants pour lesquelles il présente l'avantage de permettre une fabrication en cuisine centralisée et le réchauffage des plats dans des fours à micro-ondes permettant de satisfaire rapidement à la demande de la clientèle, ainsi qu'à la préparation de plats cuisinés pour des distributeurs automatiques en armoires frigorifiques, etc.

**Revendications**

1. Procédé pour préparer un produit à pasteuriser par exemple alimentaire permettant d'assurer une conservation de longue durée de ce produit sans en détériorer les qualités et caractéristiques nutritionnelles, rhéologiques et organoleptiques, et qui consiste :

- à déterminer la valeur cuisatrice (Cg) du produit, et

- à soumettre le produit à un traitement thermique ou cuisson permettant d'atteindre ladite cuisatrice (Cg) sans la dépasser,

- à mesurer le pH et le Rh2 du produit et à en déduire la valeur pasteurisatrice correspondante (P),

- à mesurer le rapport Aw de l'eau libre à l'eau totale contenue dans le produit, et à déterminer la courbe de chauffage du traitement thermique, en jouant sur les valeurs du pH et/ou du Rh2 et/ou du rapport Aw du produit, sans diminuer le pH en dessous de 4,5 et en veillant à ce que l'évolution de la température de cuisson dans le temps permette de dépasser la température du minimum létal, sous laquelle les streptocoques D ne sont pas détruits, afin d'obtenir simultanément que lorsque la valeur cuisatrice (C ) est atteinte, la valeur pasteurisatrice (P) est au moins atteinte, et de préférence dépassée, et que le produit se trouve dans des conditions physico-chimiques correspondant à la zone d'inhibition des germes de Clostridium botulinum,

**caractérisé par le fait qu'**il consiste, au début du traitement thermique, à mesurer la température initiale du produit, à déterminer la plage de températures du traitement thermique à l'aide d'un faisceau de courbes donnant, pour différentes valeurs du pH et du Rh2, les valeurs pasteurisatrices en fonction de la température et du temps de cuisson, à calculer, en se basant sur ce faisceau de courbes, la somme des points de pasteurisation pour le pH et du Rh2 mesurés, et, lorsque la valeur cuisatrice est atteinte, à conserver le traitement thermique et les conditions physico-chimiques du produit ainsi définis, si ladite somme est supérieure à la valeur pasteurisatrice, tandis que si ladite somme est inférieure à la valeur pasteurisatrice, on modifie le pH et /ou le Rh2 du produit et la température maximum du traitement thermique, et que si ladite somme est sensiblement égale à la valeur pasteurisatrice, on modifie seulement la température maximum du traitement thermique, afin d'obtenir un nouveau traitement thermique pour lequel ladite somme sera supérieure à la valeur pasteurisatrice dès que la valeur cuisatrice aura été atteinte, à mesurer le rapport Aw après un refroidissement rapide à coeur du produit, à lire sur les courbes exprimant Aw en fonction du pH et du Rh2 si le produit se trouve dans une zone de stabilité et d'inhibition du Clostridium, et si le produit se situe dans la zone de germination, à modifier le pH et le rapport Aw de sorte qu'il vienne dans ladite zone d'inhibition.

2.  Procédé de préparation selon la revendication 1, **caractérisé par le fait qu'**il consiste à effectuer le traitement thermique au bain-marie, à l'étuve ou en autoclave, avec une pente relativement faible de montée en température entre une température minimale et une température maximale choisies en tenant compte des caractéristiques rhéologiques du produit à pasteuriser par exemple alimentaire, la température maximale restant toujours inférieure à 100°C afin d'empêcher une destruction de l'aspect du produit.

3.  Procédé de préparation selon l'une des revendications I et 2, **caractérisé par le fait qu'**on déduit la valeur pasteurisatrice (P) à partir du pH et du Rh2 mesurés, à l'aide d'une portion d'un faisceau de courbes qui l'exprime en fonction du pH et du Rh2.

4.  Procédé de préparation selon l'une des revendications 1 à 4, **caractérisé par le fait qu'**il consiste à appliquer le traitement thermique en reproduisant une courbe de pénétration de la chaleur à coeur, au point critique du produit.

## Patentansprüche

1.  Verfahren zur Zubereitung eines zu pasteurisierenden Produkts, z. B. eines Nahrungsmittelprodukts, zur Gewährleistung einer Langzeitkonservierung des Produkts ohne Beeinträchtigung seiner ernährungsbezogenen, rheologischen und organoleptischen Qualität und Charakteristik, bestehend aus:

    -   Bestimmen des Kochwerts (Cg) des Produkts,
    -   Durchführen einer thermischen Behandlung oder Kochbehandlung des Produkts, die das Erreichen des Kochwerts (Cg) ermöglicht, ohne diesen zu überschreiten,
    -   Messen des pH-Werts und des Rh2-Werts des Produkts und Ableiten des entsprechenden Pasteurisationswerts (P),
    -   Messen des Verhältnisses Aw von im Produkt enthaltenem freiem Wasser zum gesamten Wasser und Bestimmen der Erwärmungskurve für die thermische Behandlung, wobei man den pH-Wert und/oder den Rh2-Wert und/oder das Aw-Verhältniss des Produkts beeinflusst, wobei man den pH-Wert nicht unter 4,5 fallen lässt und dafür sorgt, dass die Entwicklung der Kochtemperatur im Verlauf der Zeit es ermöglicht, dass die minimale letale Temperatur, unter der die Streptokokken D nicht vernichtet werden, überschritten wird, um gleichzeitig zu dem Ergebnis zu kommen, dass dann, wenn der Kochwert (Cg) erreicht ist, der Pasteurisationswert (P) mindestens erreicht und vorzugsweise überschritten wird und dass sich das Produkt in einem physikochemischen Zustand befindet, der der Hemmzone von Keimen von Clostridium botulinum entspricht,

**dadurch gekennzeichnet, dass** es zu Beginn der thermischen Behandlung besteht aus: Messen der Anfangstemperatur des Produkts, Bestimmen des Temperaturbereiches der thermischen Behandlung mittels eines Kurvenbündels, das für verschiedene pH- und Rh2-Werte die Pasteurisationswerte als Funktion der Kochtemperatur und der Kochzeit angibt, Berechnen - auf der Baisis dieses Kurvenbündels - der Summe der Pasteurisationspunkte für die gemessenen pH- und Rh2-Werte und, wenn der Kochwert erreicht ist, Festhalten der thermischen Behandlung und der auf diese Weise definierten physikochemischen Bedingungen des Produkts, wenn diese Summe über dem Pasteurisationswert liegt, während man dann, wenn diese Summe unter diesem Pasteurisationswert liegt, den pH-Wert und/oder den Rh2-Wert des Produkts und die maximale Temperatur der thermischen Behandlung modifiziert, und dass man, wenn die Summe im wesentlichen dem Pasteurisationswert entspricht, nur die maximale Temperatur der thermischen Behandlung modifiziert, um ein neues thermisches Behandlungsniveau zu erhalten, für das diese Summe über dem Pasteurisationswert liegt, sobald der Kochwert erreicht ist, Messen des Aw-Verhältnisses nach raschem Abkühlen in der Mitte des Produkts, Ablesen auf den Kurven, die das Aw-Verhältnis in Funktion des pH-Werts und des Rh2-Werts angeben, ob sich das Produkt in einer Stabilitäts- und Hemmzone für Clostridium befindet und ob sich das Produkt in einer Keimungszone befindet, und Modifizieren des pH-Werts und des Aw-Verhältnisses in der Weise, dass das Produkt in diese Hemmzone gelangt.

2.  Zubereitungsverfahren nach Anspruch 1, **dadurch gekennzeichnet, dass** es aus folgendem besteht: Durchführen der thermischen Behandlung mit einem Wasserbad, einem Ofen oder einem Autoklaven mit einer relativ geringen Steigung der Temperaturerhöhung zwischen der gewählten Minimaltemperatur und der gewählten Maximaltemperatur unter Berücksichtigung der rheologischen Eigenschaften des zu pasteurisierenden Produkts, z. B. eines Nahrungsmittelprodukts, wobei die maximale Temperatur immer unter 100°C liegt, um eine Beeinträchtigung des Erscheinungsbilds des Produkts zu verhindern.

3.  Zubereitungsverfahren nach einem der Ansprüche 1 und 2, **dadurch gekennzeichnet, dass** man einen Pasteurisationswert (P) von den gemessenen pH- und Rh2-Werten mithilfe eines Teils eines Kurvenbündels, das eine Funktion des pH-Werts und des Rh2-Werts ist, ableitet.

4. Zubereitungsverfahren nach einem der Ansprüche 1 bis 4, **dadurch gekennzeichnet, dass** es in der Anwendung der thermischen Behandlung unter Aufstellen einer Eindringkurve der Wärme in die Mitte, d. h. in den kritischen Punkt, des Produkts besteht.

## Claims

1. A method of preparing a product for pasteurising, especially but not exclusively a food, so as to ensure that the product has a long shelf life without affecting its nutritional, rheological or organoleptic properties, and comprising:

   - determining the cooking threshold value (Cg) of the product and
   - subjecting the product to heating or cooking treatment so as to achieve the said value (Cg) without exceeding it,
   - mesauring the pH and the rH2 of the product and deducing the corresponding pasteurisation threshold value (P) thereof, and
   - measuring the ratio Aw of free water to total water in the product and determining the heat-treatment heating curve by varying the pH and/or rH2 value and/or the Aw ratio of the product without reducing the pH below 4.5 and taking care that the variation with time of the cooking temperature is sufficient to exceed the lethal minimum temperature below which streptococci D are not destroyed, in order simultaneously to ensure that when the cooking threshthold value (C) is reached, the pasteurisation threshold value (P) is at least reached and preferably exceeded, and that the product is under physical and chemical conditions corresponding to the Clostridium botulinum germ inhibition region,

   **characterised in that** it comprises, at the begining of the heat treatment, measuring the inital temperature of the product ; determining the range of heat-treatment temperatures by means of a family of curves which, for different values of the pH and rH2, give the pasteurisation threshold values in dependence on the temperature and duration of cooking ; calculating, on the basis of the family of curves, the sum of the pasteurisation points for the measured pH and rH2 and, when the cooking threshold value is reached, maintaining the heat treatment and the physical and chemical properties of the thus-defined product if the said sum is above the pasteurisation threshold value whereas if the said sum is below the pasteurisation value the pH and/or the rH2 of the product and the maximum heat-treatment temperature are modified, and if the said sum is substantially equal to the pasteurisation threshold value, only the maximum temperature of heat-treatment is modified in order to obtain a new heat-treatment at which the said sum will be greater than the pasteurisation threshold value as soon as the cooking threshold value has been reached ; measuring the ratio Aw after rapid cooling of the product up to its interior ; reading the curves expressing Aw in dependence on the pH and rH2 to see whether the product is within a Clostridium stability and inhibition zone, and if the product is within the germination region, modifying the pH and the ratio Aw so that it comes within the said inhibition region.

2. A method of preparating according to claim 1, **characterised in that** the comprises heat-treatment in a water bath or oven or autoclave with a relatively gentle slope of temperature rise between a minimum temperature and a maximum temperature chosen to allow for the rheological characteristics of the product for pasteurising, for example the food, the maximum temperature always remaining below 100°C so as not to spoil the apperance of the product.

3. A method of preparation according to claim 1 or 2, **characterised in that** the pasteurisation thresold value (P) is deduced from the measured pH and the rH2, using a portion of a family of curves which express (P) in dependence on the pH and the rH2.

4. A method of preparation according to any of claims 1 to 3, **characterised in that** it comprises applying the heat-treatment by reproducing a curve of penetration of heat to the interior, at the critical point of the product.

Valeurs de pasteurisation pour aW = 0,995

Figure 1

EP 0 772 407 B1

Valeurs de pasteurisation pour aW = 0,985

Figure 2

EP 0 772 407 B1

**Valeurs de pasteurisation pour aW = 0,975**

VP

pH

**Figure 3**

Figure 4

Valeurs de pasteurisation pour aW = 0,955

Figure 5

EP 0 772 407 B1

Figure 6